# EUROPEAN PATENT SPECIFICATION

(11) **EP 1 623 186 B1**
(45) Date of publication and mention of the grant of the patent: **01.07.2015**
(21) Application number: 04750508.6
(22) Date of filing: 23.04.2004
(51) Int. Cl.: H01J 35/24

(54) **RADIATION SOURCES AND RADIATION SCANNING SYSTEMS WITH IMPROVED UNIFORMITY OF RADIATION INTENSITY**
STRAHLUNGSQUELLEN UND STRAHLUNGS-SCAN-SYSTEME MIT VERBESSERTER GLEICHFÖRMIGKEIT DER STRAHLUNGSINTENSITÄT
SOURCES DE RAYONNEMENT ET SYSTEMES DE BALAYAGE A RAYONNEMENT A MEILLEURE UNIFORMITE DES INTENSITES DE RAYONNEMENT

(30) Priority: 25.04.2003 US 423770
(43) Date of publication of application: 08.02.2006
(73) Proprietor: Varian Medical Systems, Inc., Palo Alto, CA 94304 (US)
(72) Inventor: BJORKHOLM, Paul, Newport Beach, CA 92660 (US); CLAYTON, James, E., Henderson, NV 89052 (US)
(74) Representative: Tomkinson, Alexandra
(86) International application number: PCT/US2004/012511
(87) International publication number: WO 2004/097337

(56) References cited:
- EP-A- 0 024 325
- DE-C1- 19 509 516
- US-A- 4 726 046
- US-A- 5 124 658
- US-A- 5 159 617
- US-A- 5 251 240
- US-A- 5 267 296
- US-A- 6 009 146
- US-B1- 6 421 420
- US-B1- 6 442 233
- US-B1- 6 628 745

## Description

### Field of the Invention

Radiation sources and radiation scanning systems for examining the contents of an object.

### Background of the Invention

Radiation is commonly used in the non-invasive inspection of objects such as luggage, bags, briefcases, and the like, to identify hidden contraband at airports and public buildings. The contraband may include hidden guns, knives, explosive devices and illegal drugs, for example. As criminals and terrorists have become more creative in the way they conceal contraband, the need for more effective non-invasive inspection techniques has grown. While the smuggling of contraband onto planes in carry-on bags and in luggage has been a well-known, on-going concern, a less publicized but also serious threat is the smuggling of contraband across borders and by boat in large cargo containers. Only 2%-10% of the 17 million cargo containers brought to the United States by boat are inspected. "Checkpoint Terror", U.S. News and World Report, February 11, 2002, p. 52.

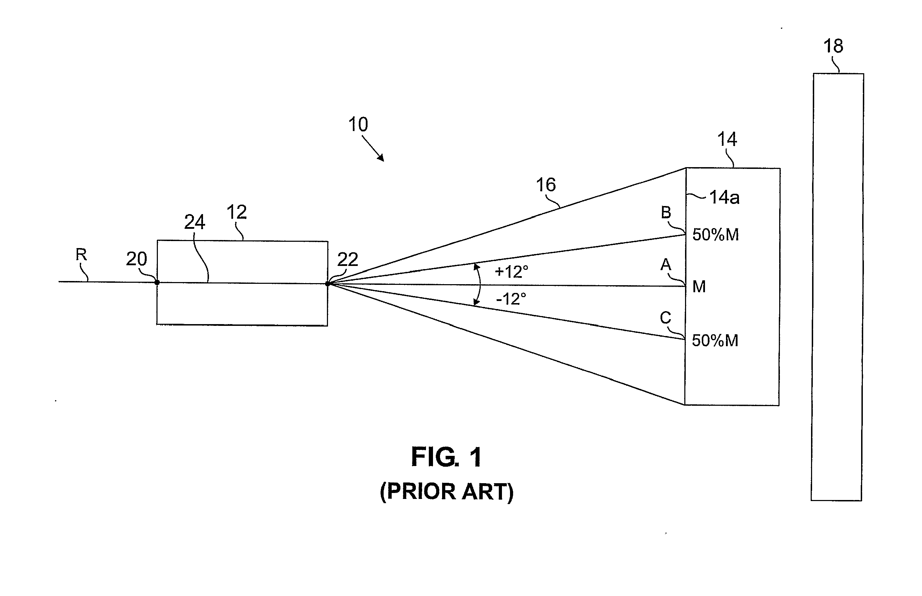

Fig. 1 is a schematic diagram of a radiation scanning system 10 including a radiation source 12 scanning an object 14 with a vertically diverging fan beam 16 of radiation. A detector 18 is behind the object 14, to detect radiation transmitted through the object. The object is moved horizontally (out of the page) through the vertically extending fan beam 16 by a conveying system (not shown). Radiation transmitted through the object 14 is attenuated to varying degrees by the object and its contents. The attenuation of the radiation is a function of the density and atomic composition of the materials through which the radiation passes. The attenuated radiation is detected and radiographic images of the contents of the object 14 are generated for inspection. The images show the shape, size and varying densities of the contents.

To examine larger objects (greater than about 5 feet, 1.5 meters thick, for example), the radiation source 10 may be a linear accelerator including a source of electrons 20 and a target 22 of material having a high atomic number, such as tungsten. An electron beam 24 is shown being emitted along an axis R through the electron source 20 and the target 22, referred to as a central ray. The electron beam 24 impacts the target 22, causing generation of a beam of X-ray radiation. Linear accelerators are described in more detail in U.S. Patent No. 6,366,021 B1, U.S. Patent No. 4,400,650 and U.S. Patent No. 4,382,208, which are assigned to the assignee of the present invention and are incorporated by reference, herein.

The radiation beam is collimated into the fan beam 16 by a collimator (not shown) at a distal end of the source 12. The fan beam 16 is emitted over an arc of about 30°. The fan beam illuminates a front face 14a of the object 14. The system 10 may be referred to a line scanner.

The intensity of the X-ray beam at point A on the face of the object 14, aligned with the central ray, is at a maximum M. The intensity of the X-ray beam 18 decreases as the angle from the central ray R increases. At best, the intensity is substantially uniform over only a few degrees around the central ray. For example, for a 9 MeV (peak intensity) X-ray beam 18, the intensity of the beam at an angle of about +/- 12°, indicated as points B and C on the face 11 a of the cargo conveyance 18, is about 50% of the intensity at point A, along the central ray. Better radiation scanning systems for scanning objects can compensate for intensity drops of up to about 50%. As intensity drops beyond about 50% at higher angles from the central ray R, however, the object penetration and contrast sensitivity may become significantly reduced. The intensity of the radiation beam also decreases as the distance between the source 10 and the object 14 increases, as a function of the square of the distance.

Standard cargo containers are typically 20-50 feet long (6.1-15.2 meters), 8 feet high (2.4 meters) and 6-9 feet wide (1.8-2.7 meters). Air cargo containers, which are used to contain a plurality of pieces of luggage or other cargo to be stored in the body of an airplane, may range in size (length, height, width) from about 35 x 21 x 21 inches (0.89 x 0.53 x 0.53 meters) up to about 240 x 118 x 96 inches (6.1 x 3.0 x 2.4 meters). Sea cargo containers are typically about 40 feet long, 8 feet wide and 8 feet high. Large collections of objects, such as many pieces of luggage, may also be supported on a pallet. Pallets, which may have supporting side wall, may be of comparable sizes as cargo containers. The term "cargo conveyance" is used herein to encompass cargo containers, sea containers and pallets.

To illuminate large cargo conveyances with a more uniform portion of an X-ray beam (within about 50% of maximum), the source must be very far from the cargo conveyance. For example, to illuminate a cargo container with a height of about 8 feet (2.4 meters) with a vertical radiation beam emitted over an angle of about 24 degrees (+/-12 degrees from the central ray), the source needs to be about 19 feet (about 5.8 meters) from the face of the cargo container. If the beam could be emitted over an angle of about 120 degrees (+/-60) degrees from the central ray), in contrast, the source may be about 2.5 feet (about 0.8 meters) from the face of the cargo container. More compact radiation scanning systems, where the radiation source is closer to the object than in current systems, would be advantageous. They would occupy less space, as well as suffer from less drop in radiation intensity due to the distance between the source and the object.

### Summary of the Invention

In accordance with embodiments of the invention, the intensity distribution of a radiation beam on a face of an object under inspection is improved by deflecting a beam of charged particles, such as electrons, along a plurality of central rays to cause impact on a target material to generate radiation beams along the plurality of central rays. The greater the number of beams along respective central rays, the more uniform the radiation intensity on the face of the object. Embodiments are disclosed that effectively deflect the beam of charged particles along a large number of central rays, which may result in more uniform radiation intensity on the face of the object.

In accordance with the invention, a radiation source is disclosed comprising a housing and a first, accelerating chamber within the housing to accelerate a beam of charged particles an output of the chamber. A second chamber within the housing has an input aligned with the output of the first chamber to receive the beam of accelerated charged particles. Target material is supported within the second chamber. Impact of the target material by the accelerated charged particles causes generation of radiation. An electromagnet supported by the housing proximate the second chamber, to selectively provide a magnetic field to selectively deflect the beam of accelerated charged particles along a central ray prior to impacting the target material, such that it impacts the target along that deflected central ray and a controller, characterized in that the controller is configured to selectively cause generation of a magnetic field by the electromagnet to deflect the electron beam in a first direction so that the electron beam impacts the target at a first location to generate a first radiation beam, and to not generate a magnetic field so that the electron beam impacts the target at a second location different from the first location to generate a second radiation beam different from the first radiation beam. The resulting radiation will have a maximum intensity along a central ray of the deflected beam.

By deflecting the beam one or more times and/or not deflecting the beam, a plurality of radiation beams may be generated, each having maximum intensities along different central rays, improving the uniformity of radiation intensity about an angular range.

The electromagnet may generate a time-varying field. The electromagnet may be cycled between generating a magnetic field in a first direction, generating a magnetic field in a second direction, which may be opposite the first direction, and being off, for example. The beam of charged particles is then deflected along a first axis, deflected along a second axis and passes undeflected, respectively, to impact the target along the first axis, the second axis and a third, undeflected axis, respectively. Radiation resulting from the impact on the target along each axis has a peak intensity along each axis. An object being irradiated by the resulting radiation will thereby be exposed to a more uniform intensity of radiation.

The beam of charged particles may be a beam of electrons, for example. The target may be a refractory metal, such as tungsten, for example. The radiation resulting from the impact of the target by the beam may be X-ray radiation, for example.

In accordance with another embodiment of the invention, a linear accelerator is disclosed comprising a housing. An accelerating chamber with an output is provided within the housing. The chamber has a first longitudinal axis aligned with the output. A source of electrons is supported by the housing to emit electrons along the first longitudinal axis. A tube comprises a passage having a second longitudinal axis, has a first end with an input coupled to the output of the chamber such that the second longitudinal axis is aligned with the first longitudinal axis. Target material is supported within the tube. A magnet is supported by the housing. The magnet has opposing poles partially surrounding the tube, to provide a magnetic field to deflect the electron beam prior to impacting the target.

In accordance another embodiment of the invention, a radiation source is disclosed comprising a housing and a source of charged particles supported by the housing. Target material is supported by the housing along a path of the charged particles. Impact of the charged particles with the target causes generation of radiation. A magnet is supported by the housing between the source and the target.

In accordance with the invention, a system for examining an object is disclosed comprising a conveyor system to move the object through the system and a source of radiation. The radiation source comprises a housing and a source of a beam of charged particles supported by the housing. The source of charged particles has an output to provide the beam along a path. A target material is supported by the housing along the path. The target material generates radiation upon impact of the beam with the target. A magnet is supported by the housing and partially surrounds the longitudinal path, to provide a magnetic field to deflect the beam prior to impacting the target. The radiation source is positioned with respect to the conveying system such that radiation emitted by the source irradiates an object for inspection on the conveying system. A detector is positioned to receive radiation interacting with the object. The object may be irradiated with substantially uniform intensity. As mentioned above, the term "substantially uniform intensity" as used herein means that the intensity is uniform within the tolerances of the radiation source, including the magnet.

The radiation source may be on a first side of the conveying system and a detector may be on a second side of the conveying system, to detect radiation transmitted through the object. The radiation source may be configured as described above, for example. The radiation source may have a first, longitudinal axis and the radiation beam may have a central ray along a second axis transverse to the first axis, to irradiate an object that is not aligned with the longitudinal axis of the radiation source.

In accordance with another embodiment of the invention, a method of generating radiation is disclosed comprising directing a beam of charged particles towards a target, deflecting the beam and impacting the target by the deflected beam. The beam may be deflected by providing a magnetic field, which may be a time-varying magnetic field or a constant magnetic field. The constant magnetic field may vary spatially across a width of the beam of charged particles, to differentially deflect the beam.

In accordance with another embodiment of the invention, a method of examining contents of an object with a radiation source is disclosed comprising directing a beam of charged particles along a longitudinal path, towards a target, deflecting the beam and impacting the target by the deflected beam to generate radiation. The method further comprises irradiating the object with the radiation and detecting radiation interacting with the object.

### Brief Description of the Drawings

Fig. 1 is a schematic diagram of a prior art radiation scanning system including a radiation source scanning an object with a vertically diverging fan beam of radiation;
Fig. 2 is a schematic axial sectional view of an example of a radiation source, such as a linear accelerator, in accordance with an embodiment of the invention;
Fig. 3 is a front view of a schematic representation of an electromagnet that may be provided in the distal portion of the linear accelerator of Fig. 2;
Fig. 4 is a side view of a pole of the electromagnet of Fig. 3 along arrow 4, showing a radiation beam when the electromagnet is not driven by current;
Fig. 5 is a side view of the pole, as in Fig. 4, and a resulting deflected radiation beam, when the electromagnet is driven by a current in a first direction;
Fig. 6 is a side view of the pole, as in Fig. 4, and a resulting deflected radiation beam, when the electromagnet is driven by a current in a second direction (opposite the first direction);
Fig. 7 shows the radiation beams of Figs. 4-6, generated by the source in accordance with the embodiment of Fig. 3, illuminating a face of a cargo conveyance;
Fig. 8 is a front view of a target for use in the embodiment of Fig. 3;
Fig. 9 is a graph of Current (I) versus Time (T), showing an example of a sinusoidally varying current;
Fig. 10 is a front view of an example of a permanent magnet;
Fig. 11 a side view along the poles of a permanent magnet, of Fig. 10, showing a triangular shaped pole and resulting deflected electron beam;
Fig. 12 is a side view as in Fig. 11, showing the uppermost and lowermost portions of the electron beam crossing-over each other prior to impacting the target;
Fig. 13 is a front view of an elongated target for use in the example of Fig. 10;
Fig. 14 is a side view as in Figs. 11 and 12, where the polarity of the magnet is reversed, showing the electron beam deflected downward and diverging;
Fig. 15 is a front view of a permanent magnet with pole portions having opposing, inwardly tapered pole faces;
Fig. 16 is a top view of a radiation source illuminating a face of a cargo conveyance with a radiation beam, where an axis of the source is not aligned with the cargo conveyance; and
Fig. 17 is a front view of an X-ray scanning system in accordance with an embodiment of the invention.

### Description of the Preferred Embodiments

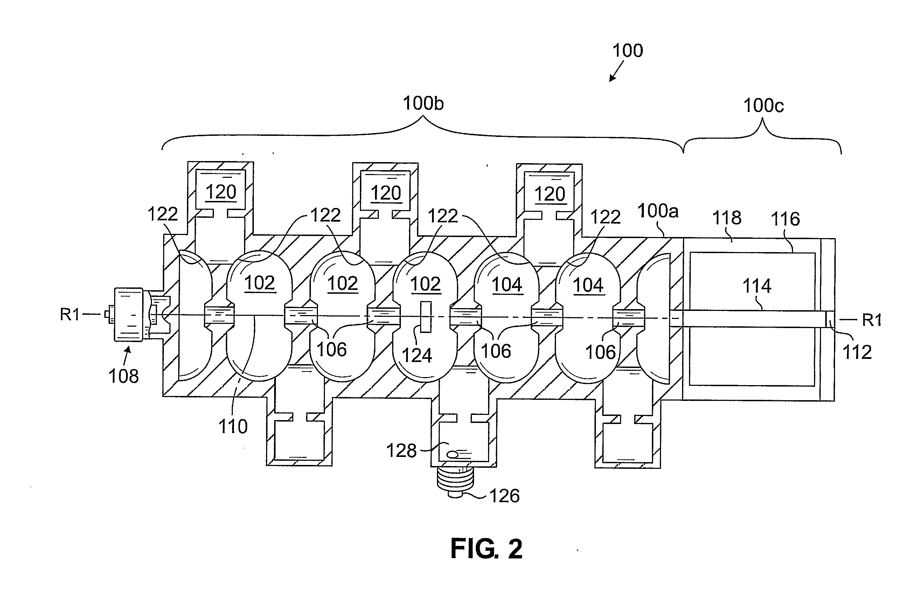

Fig. 2 is a schematic axial sectional view of an example of a radiation source 100, in accordance with an embodiment of the invention, wherein a beam of charged particles is accelerated and directed towards a target to generate radiation. The charged particles may be electrons or protons. The resulting radiation may be X-ray radiation, gamma ray radiation, or neutrons, for example.

In one example, the source 100 is an accelerator, such as a linear accelerator, generating X-ray radiation. The linear accelerator 100 may be a charged particle standing wave accelerator, for example. The linear accelerator 100 comprises a housing 100a with a body portion 100b and a distal portion 100c. The body portion 100a includes a chain of electromagnetically coupled, doughnut shaped resonant cavities 102, 104, with aligned central beam apertures 106. An electron gun 108 at one end of the chain of cavities emits an electron beam 110 through the apertures 106. The source 100 may be a betatron or a cyclotron, as well.

In the distal portion 100b, a first end of a drift tube 114 is connected to a second end of the chain of cavities. A target 112 of tungsten, for example, is provided at a second end of the drift tube 114. The target 112 may be disc shaped or may be elliptical, as discussed further below. The target material may be other materials with a high atomic number and a high melting points, such as other refractory metals. A magnet 116 is provided around the drift tube 114. Shielding material 118, of tungsten, for example surrounds the magnet 116 and drift tube 114. The cavities 102, 104 are electromagnetically coupled together through a "side" or "coupling" cavity 120 that is coupled to each of the adjacent pair of cavities by an iris 122. The cavities are under vacuum. Microwave power enters one of the cavities along the chain, through an iris 124, to accelerate the electron beam 110. The linear accelerator body 100a is excited by microwave power at a frequency near its resonant frequency, between about 1000 to about 10,000 MHz, for example. After being accelerated, the electron beam 110 strikes the target 112, causing the emission of X-ray radiation.

Movable plungers or probes 126 may extend radially into one of the coupling cavities 128 to vary the energy of the accelerating electrons, to generate radiation beams at multiple energies. One probe 122 is shown in Fig. 2. A corresponding probe is provided in the cavity 124 behind the probe 122 and cannot be seen in this view. The probes 122 are moved under the control of a computer program to alter the magnetic fields within the cavity. The energy of the radiation generated by the electrons as the electron beam 110 impacts the target is thereby varied. Such a linear accelerator 100 is described in more detail in U.S. Patent No. 6,366,021 B1, which is assigned to the assignee of the present invention and is incorporated by reference, herein. Linear accelerators are also described in U.S. Patent No. 4,400,650 and U.S. Patent No. 4,382,208, which are also assigned to the assignee of the present invention and are incorporated by reference, herein.

In accordance with an embodiment of the invention, the magnet 116, which may emit a time varying magnetic field or a constant magnetic field, selectively deflects the electron beam 110 so that it impacts the target 112 at one or more locations displaced from the central axis of the initial beam 58, changing the central rays of the resulting radiation beam, as discussed further below. The magnet 116 may be an electromagnet, generating a time-varying or constant magnetic field, a permanent magnet generating a constant magnetic field, or a combination of the two.

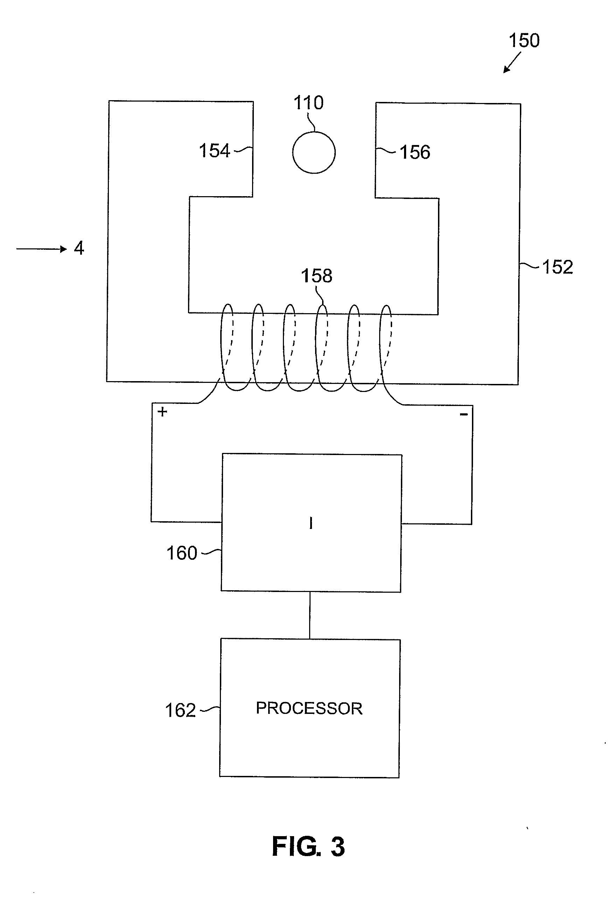

Fig. 3 is a front view of a schematic representation of an electromagnet 150 that may be provided in the distal portion 100b of the linear accelerator 100. The electromagnet may comprise a horseshoe-shaped core of 152 of ferromagnetic or paramagnetic material. Iron, nickel or aluminum-nickel-cobalt alloys, such as Alnico may be used, for example. The core 152 defines opposing pole faces 154, 156. A coil 158 is wound around the core 152, coupled to a current source 160. A controller 162 is coupled to the current source to control operation of the current source. Controller 162 may be part of or separate from the current source 160. To generate time-varying currents, controller 162 may be a processor. If a constant current is to be generated, the controller 162 may be an on-off switch or have a variable setting, for example. Current flowing through the coil 158 induces a magnetic field in the core 152 and between the pole faces 154, 156. The direction and magnitude of the magnetic field between the pole faces 154, 156 changes as the direction of the current in the coil changes. The electron beam 110 is shown between the pole faces 152, 154.

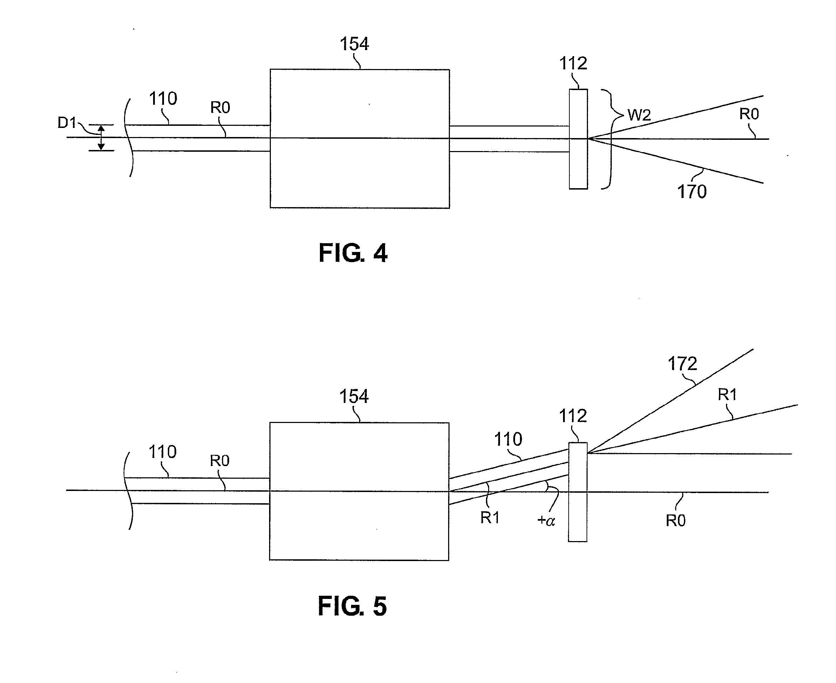

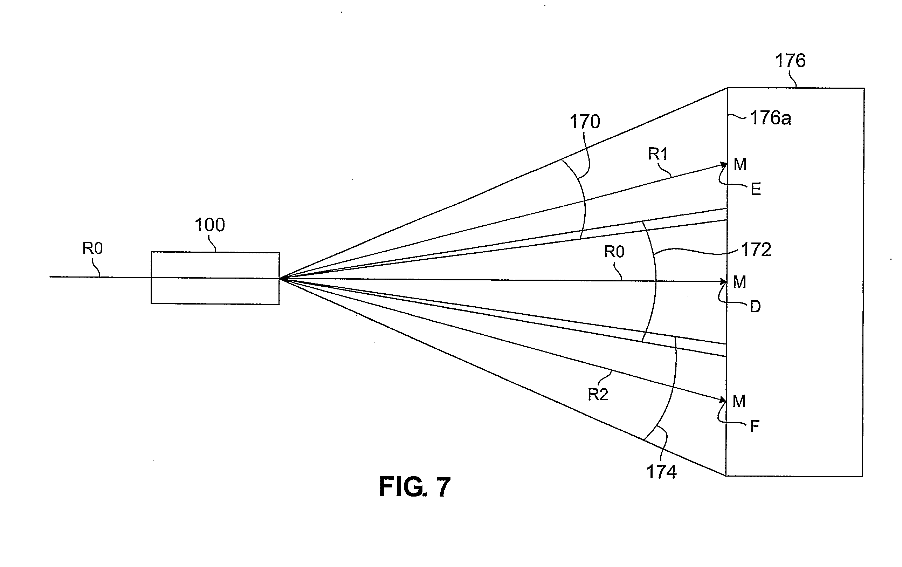

Fig. 4 is a side view of the pole 154 along arrow 4 of Fig. 3. The pole 156 is directly behind the pole 154 and is not indicated in this view. The target 112 is shown, as well. No current is flowing through the coil 158 and there is no magnetic field generated between the pole faces. After acceleration by the accelerator body 110a (not shown in this view), the electron beam 110 travels along the central ray RO and impacts the target 112. A radiation beam 170 is generated, centered about the central ray R0. The radiation beam 170 may be collimated to a fan beam of a desired angle, such as about 20 degrees. The radiation beam 170 has its peak intensity M along the central ray R0, as shown in Fig. 7.

Fig. 5 is a side view of the pole 154 along arrow 4 of Fig. 3, when an alternating current is flowing through coil 158 in a first direction. A magnetic field flows from the pole 156 to the pole 154 in Fig. 3. The electron beam 110 is deflected by the magnetic field along a first deflected central ray R1 at an angle +α with respect to the central ray R0. The electron beam 110 impacts the target 112 along the first deflected central ray R1, causing generation of a radiation beam 172 centered about the first deflected central ray R1. The radiation beam 172 may be collimated to a fan beam of a desired angle, such as about 20 degrees. The radiation beam 172 has a peak intensity M along the first deflected central ray R1, as shown in Fig. 7.

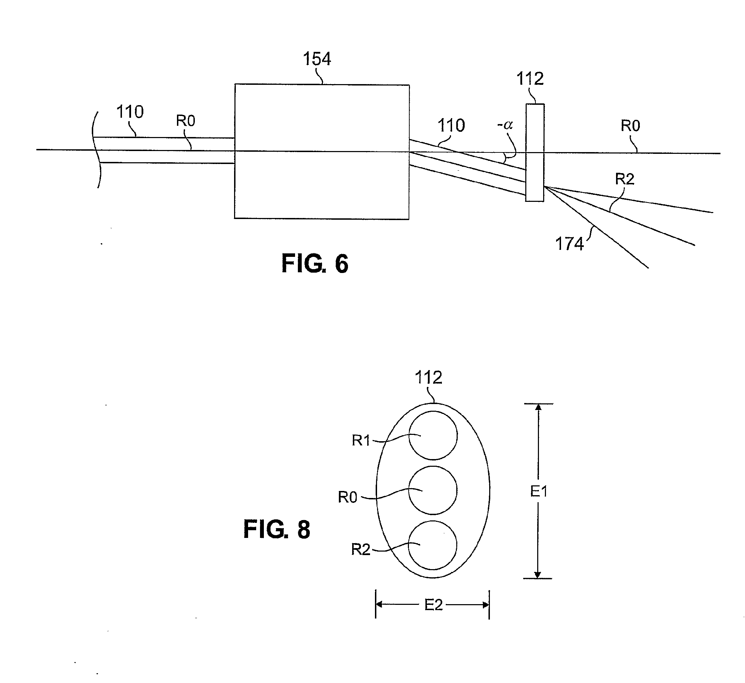

Fig. 6 is a side view of the pole 154 along arrow 4 of Fig. 3, when an alternating current is flowing in a second direction (opposite the first direction). A magnetic field flows from the pole 154 to the pole 156 in Fig. 3. The electron beam is deflected by the beam along a second deflected central ray R2 at an angle -α with respect to the central ray R0. The electron beam 110 impacts the target 112 along the second deflected ray R2 and a radiation beam 174 is generated, centered about the second deflected central ray R2. The radiation beam 174 may be collimated to a fan beam of a desired angle, such as about 20 degrees, for example. The peak intensity M of the radiation beam 174 is along the second deflected central ray R2, as is also shown in Fig. 7.

Fig. 7 shows the radiation beams 170, 172, 174 centered about the three central rays R0, R1, R2, respectively generated by the source 100 in accordance with this embodiment of the invention, illuminating a face 176a of a cargo conveyance 176. Each beam extends over an angle of about 20 degrees, for example. Preferably, the beams overlap their coverage of the face 176a, to ensure that the face is completely illuminated. Since each beam 170, 172, 174 need only illuminate a portion of the face 176a of the cargo conveyance 176, it may be emitted over a smaller angle than would a single beam, as in the prior art of Fig. 1. The intensity drop across each beam as the angle from each respective central ray increases, will therefore be less than when a single beam is used. Three points D, E, F, on the face 176a each receive the peak intensity M of radiation and remaining portions of the face, which are closer to a point of peak intensity than in the prior art, will also receive radiation having higher intensities. In addition, where a plurality of beams are used to illuminate an object face, the sources may be closer to the object than when a single source must illuminate the entire object face. The intensity drop caused by distance is therefore less, as well.

In Figs. 4-6, the diameter D1 of the electron beam 110 and the width W2 of the target 112 are exaggerated for ease of illustration. A typical diameter D1 for the electron beam 110 is from about 1 to about 3 mm. A typical width W2 for a disc shaped target is from about 2 to about 5 mm. To accommodate the deflection of the electron beam 110, the target 112 may be shaped like an ellipse, as shown in Fig. 8. If the electron beam 110 has a diameter D1 of about 1 mm, the ellipse may have a long axis E1 of from about 5 to about 6 mm, and a short axis E2 of about 2 mm, for example. Examples of impact locations of the electron beam 110 along central rays R0, R1, R2, are shown. The impact locations may or may not overlap.

The magnetic field may be rapidly cycled from being off, as in Fig. 4, to generating a magnetic field from pole 156 to pole 154 to cause a positive deflection, as in Fig. 5, to generating a magnetic field from pole 154 to pole 156 to cause a negative deflection, as in Fig. 6, and back to being off, under the control of processor 162. For example, one cycle (off-positive deflection - negative deflection - off) can take about 20 milliseconds. The frequency of the cycles may therefore be about 50 hertz.

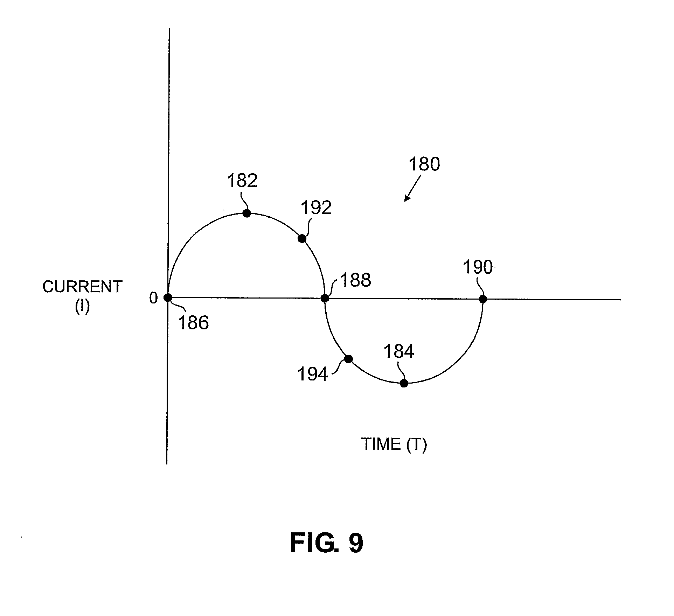

Fig. 9 is a graph of current (I) versus time (T), showing an example of a sinusoidally time-varying current 180 generated by current source 160 under the control of controller 162 in Fig. 3. The maximum 182, minimum 184 and zero points 186, and of the current 180 may be coordinated with respective pulses of a linear accelerator, such as a LINAC^{®}, for example, to cause generation of electron beams at those respective points. Such electron beam would be undeflected at Points 186, (as in Fig. 4), deflected positively at Point 182 (as in Fig. 5) and negatively at Point (as in Fig. 6), respectively, for example. A LINAC^{®} may emit pulses every 20 milliseconds, at a frequency of 50 hertz, for example. The pulses need not be emitted at the maximum, minimum and zero points of the curve of the current. The pulses may be emitted at any desired points along the curve.

By rapidly deflecting the electron beam 110, and thereby the central rays R0, R1, R2 of the resulting radiation beams, more of the face 176a of the cargo conveyance 176, or other such object, may be exposed to the highest intensity radiation and overall, the face may be exposed to higher radiation intensity than if a single radiation beam is used to illuminate the entire face, as in the prior art of Fig. 1.

While three beams will generally be sufficient, more beams may be used, particularly for larger objects. For example, 5 beams may be used to irradiate a cargo conveyance having a height of about 8 feet (2.4 meters) with a vertical fan beam. For example, two additional radiation beams, one between central rays R0 and R1, and one between central rays R0 and R2, may be generated at points 192 and 194 on the curve of Fig. 9, respectively. _Two beams may also provide some improvement, particularly for smaller objects. The angular range over which the radiation intensity will be within 50% of the maximum radiation intensity on the face of the cargo conveyance 176 may be increased two or more times in accordance with this embodiment, depending on the number of deflected beams. The entire face of the cargo conveyance 176 may thereby be irradiated with radiation within 50% of the maximum radiation, without having to distance the radiation source 100 as far from the cargo conveyance, as in the prior art.

The angle of the electron beam may also be continuously shifted between a maximum positive deflection +α and a maximum negative deflection -α by applying a time varying current to the coil 158 to generate a time varying magnetic field, under the control of processor 162. The time varying current and resulting time varying magnetic field may be sinusoidal, for example. Each point on the face 176a of the cargo conveyance 176 may then be exposed to the maximum intensity M.

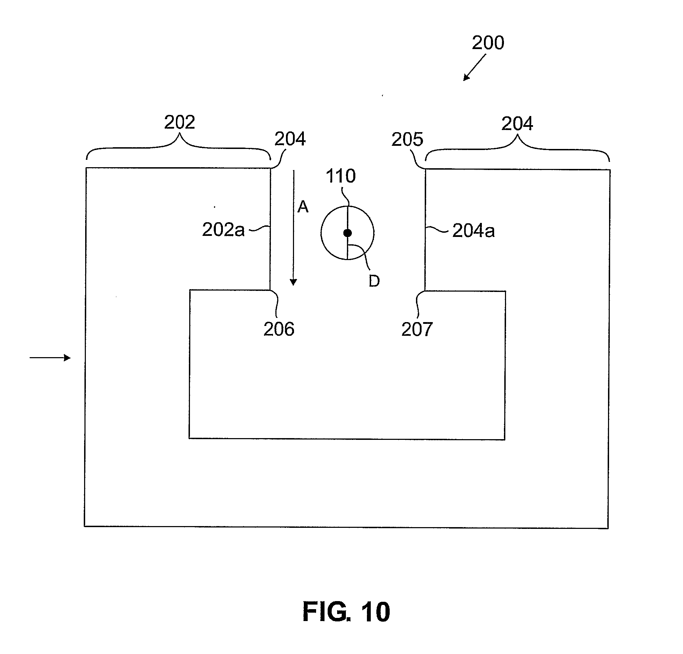

In an alternative not part of the claimed invention, the magnet 116 may also be a permanent magnet, generating a time-invariant (constant) magnetic field. In this case, the generated magnetic field varies spatially across the electron beam 110 to cause a differential variation in deflection of the electron beam. The permanent magnet may be a horseshoe magnet having the same or similar shape as the core 152 in Fig. 3, for example. The magnet may have other shapes, as well. Fig. 10 is a front view of an example of such a permanent magnet 200, with pole portions 202, 204 having opposing pole faces 202a, 204a. The permanent magnet 116 may also comprise a pair or a plurality of pairs of permanent magnets, with facing pole portions. The permanent magnet may be a ferromagnetic material, such as iron, cobalt and nickel, for example.

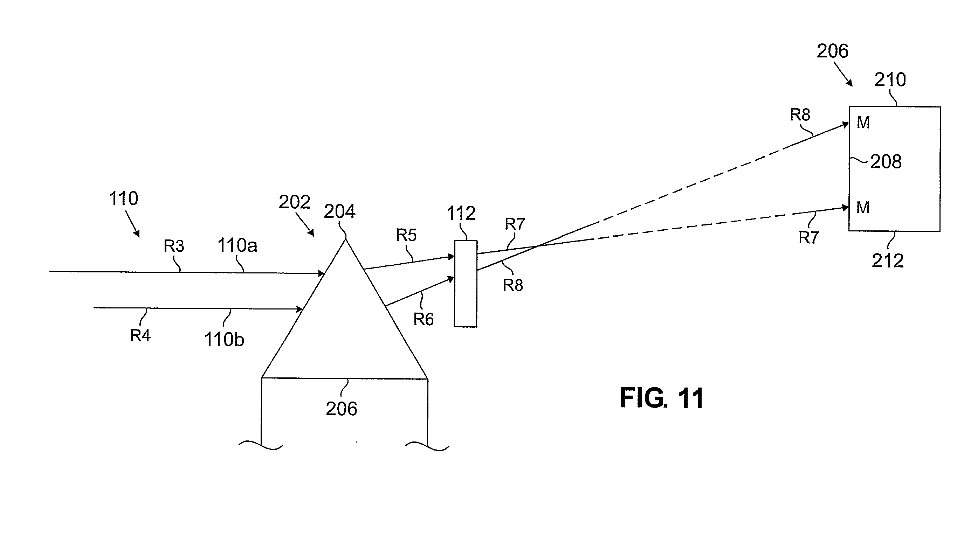

A magnetic field that varies spatially across the beam 110 may be generated in a variety of ways. For example, a spatially inhomogeneous magnetic field may be generated by a permanent magnet with irregularly shaped poles. Fig. 11 a side view along the poles of a horseshoe shaped permanent magnet, similar to the side views of Figs. 4-6, showing a triangular shaped pole 202. The opposing pole behind pole 204 cannot be seen in this view. An electron beam 110, a target 112 and a cargo conveyance 206 are also shown in Fig. 11.

The magnetic field generated between the pole faces 202a, 202b is uniform. However, different portions of an electron beam 110 passing through the space will have different path lengths through the magnetic field. For example, in Fig. 11, uppermost portion 110a of the electron beam 110 will have a shorter path length through the magnetic field than lowermost portion 110b. Central ray R3 of the uppermost portion 110a and central ray R4 of the lowermost portion R4 are also shown. Since the degree of deflection of the electron beam 110 by a magnetic field is dependent in part on the path length through the field, the uppermost portion 110a of the electron beam 110 will be deflected (along a deflected central ray R5) less than the lowermost portion 110b is deflected (along a deflected central ray R6). Since the path length through the magnetic field increases along arrow A in the space between pole faces 202a, 204a (See Fig. 10), from the vertices 204, 205 of the pole faces 202a, 204a to the lower surfaces 206, 207 of the pole faces, the degree of deflection of the electron beam 110 increases across the diameter "D" of the electron beam 110 (from an upper point 110a of the electron beam to a lower point 110b of the beam) along arrow A, as well. The uppermost portion 110a may be deflected about 5 degrees while the lowermost portion 110b is deflected about 20 degrees, for example. The deflections are upward in this configuration. Therefore, the portions 110a, 110b converge. The portions of the electron beam between the uppermost portion and lowermost portions are deflected to intermediate degrees, dependent on the respective path lengths.

The impact of the uppermost portion 110a and lowermost portion 110b of the electron beam on the target 112 generates radiation beams having deflected central rays R7, R8, respectively, aligned with deflected central rays R5, R6. The radiation beam centered about the central rays R7, R8, have peak intensities M. The radiation along the central rays R7, R8 will preferably impact a face 208 of a cargo conveyance 206 at or near the sides 210, 212 of the conveyance. The intermediate portions of the electron beam 110 will also cause generation of central rays of radiation (not shown) that will impact the face 208 of the cargo conveyance 206 at locations between the central rays R7, R8. The entire face 208 may thereby be illuminated with substantially uniform intensity M. Here, "substantially uniform intensity" means that the intensity is uniform at the face 208 of the cargo conveyance 206 within the tolerances of the radiation source, including the magnet.

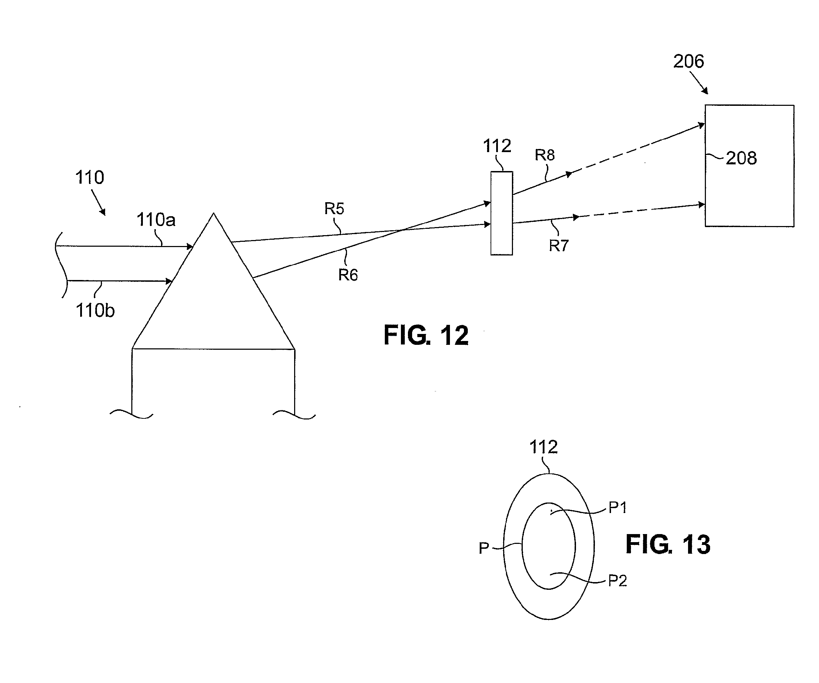

In the configuration of Fig. 11, the central rays R7, R8 cross-over each other prior to illuminating the cargo conveyance 203. The deflection may alternatively cause the uppermost and lowermost portions 110a, 110b of the electron beam 110 to cross-over each other prior to impacting the target 112, as shown in Fig. 12, dependent on the relative strength of the magnetic field, the path lengths, and the relative locations of the pole face 202, the target 112 and the cargo conveyance 203. In other arrangements, neither the portions 110a, 110b of the electron beam 110 or the central rays of radiation R7, R8 cross over.

It is advantageous that the converging electron beams not be focused onto a single point on the target 112, to avoid burning the target. The converging beams may converge upon a focal point on the target 112, from about 1mm to about 2mm, for example, to avoid burning the target 112. The target 112 may be elongated to accommodate a wider focal point, as shown in Fig. 13. In Fig. 13, the target 112 is elliptical, as is the focal point P. It may have other shapes, as well, such as rectangular. The focal point P is shown, as well. The focal point P may be elliptical, for example.

While the focal point P may be elongated, X-ray radiation received by the face 208 is emitted by only a portion of the focal point P. For example, radiation emitted along ray R8 and impacting the upper portion of the face 208, is emitted mainly from an upper portion P1 of the focal spot P impacted by a portion of the electron beam 110b along ray R6. Similarly, radiation emitted along ray R7 is generated primarily by the impact of a portion 110a of the electron beam 110 along ray R5 on the lower part P2 of the focal point P. Therefore, even if the focal spot is spread out by the divergence of the electron beam by the magnetic field, each section of the face 208 will only be illuminated by radiation emitted from a smaller portion of the focal spot. The effective focal point for portions of the radiation beam is therefore smaller than the actual focal point P, and the spatial resolution of an image of the cargo conveyance 206 irradiated by the beam will not be degraded.

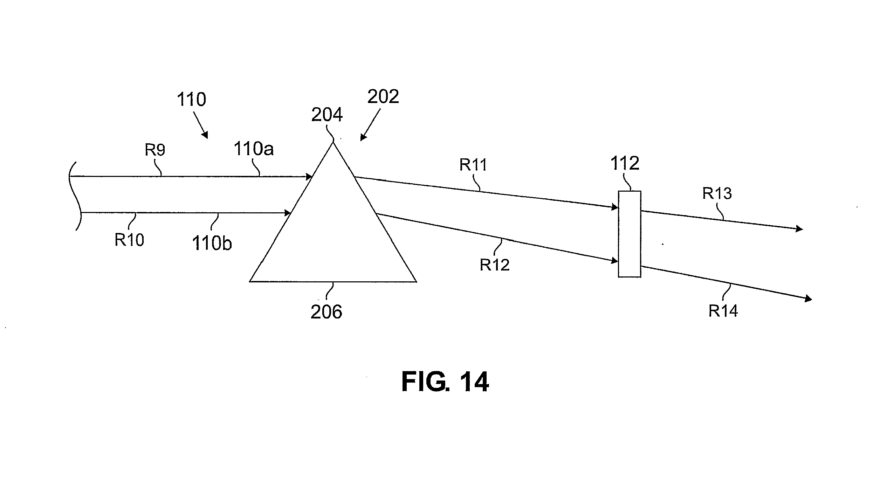

If the polarity of the magnet 200 is reversed, the electron beam 110 will be deflected downward and will diverge, as shown in Fig. 14. The uppermost portion 110a of the electron beam 110, traversing central ray R9, will be deflected downward less than the lowermost portion 110b, traversing central ray R10. The uppermost portion 110a may be deflected an angle of -α1 degrees along deflected central ray R11, for example, while the lowermost portion 110b may be deflected an angle of -α degrees, along deflected central ray R12, for example. Impact of the electron beam along central ray R11 upon the target 112 will generate a radiation beam having a central ray R13. Impact of the electron beam along central ray R12 will generate a radiation beam having a central ray R14. The source 100 and the cargo conveyance 206 are not shown in this view, but it is apparent the source may be positioned with respect to the conveyance so that the radiation beams centered about the central rays R13, R14 will illuminate the front face of the conveyance at or near the side walls of the conveyance, as in Fig. 10. Portions of the electron beam 110 between the uppermost and lowermost portions 110a, 110b will be deflected to a gradually increasing degree across the beam for the uppermost to lowermost portion, illuminating the remainder of the face 208 of the cargo conveyance 206. Preferably, the target 112 is elongated, as in Fig. 11, to accommodate an elongated focal spot. As above, the effective focal point of impact by portions of the electron beam 110 generating the radiation beam will be smaller than the actual focal point on the target 112, minimizing any negative impact on spatial resolution of an image of the cargo conveyance 206 irradiated by the beam.

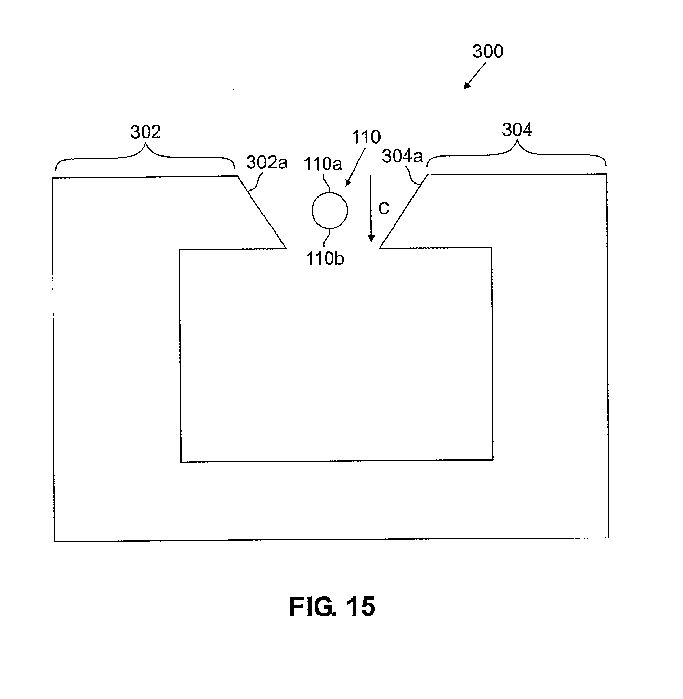

Non-uniform magnetic fields may also be generated by varying the distance between pole faces. Fig. 15 is a front view of a permanent magnet 300 with pole portions 302, 304 having opposing pole faces 302a, 304a, respectively. The pole faces are tapered towards each other. The taper is an inward taper from an upper portion to a lower portion of each face 302, 304 along arrow in Fig. 15. The taper may be reversed, as well.

The closer the pole faces 302a, 304a, the stronger the magnetic field. In Fig. 13, the upper portion of the electron beam 110a is exposed to a weaker magnetic field, and is deflected less, than a lower portion 110b of the beam. Depending on the direction of the magnetic field, the electron beam 110 will be deflected upwardly and converge, or be deflected downwardly and diverge. As above, the electron beam 110 is dispersed by the non-uniform bending of the beam, broadening the focal spot. X-ray radiation is therefore emitted by only a portion of the focal spot. The effective focal spot is therefore smaller than the actual focal spot.

Both irregularly shaped poles and varying distances between poles may be used to control the deflection of the electron beam, as well.

Magnets 200 and 300 of Figs. 10 and 15 may be electromagnets, as well, such as electromagnet 150 in Fig. 3. In this case, current source 160 may generate a constant current, under the control of controller 162. Spatial variation of the magnetic field in the space between the pole faces 202a, 204a and 302a, 304a may be created, as described above with respect to Figs. 10-15, for example.

In addition, magnet 150 in Fig. 3 may be a permanent magnet. The constant magnetic field established by the permanent magnet 150 may be varied by superimposing a time-varying magnetic field over the constant magnetic field. For example, current source 160 may provide a time-varying current in coil 158 (see Fig. 9) that will induce a magnetic field varying about the magnitude of the constant magnetic field.

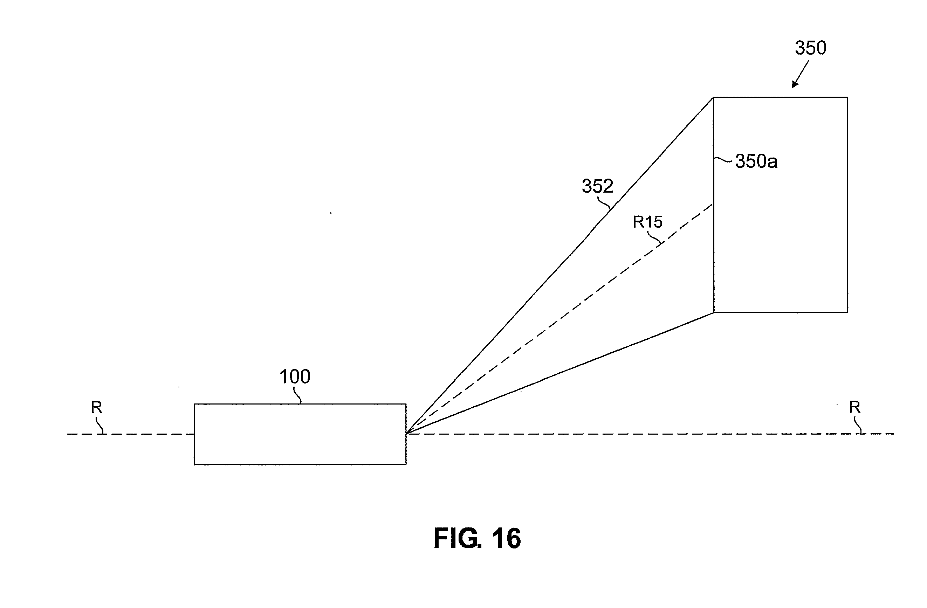

The average direction of a radiation beam may also be shifted. Fig. 16 is a top view of a source 100 illuminating a face 350a of a cargo conveyance 350 with a radiation beam 352, where a longitudinal axis R of the source is not aligned with, and may not even intersect, the cargo conveyance. A central ray R15 of the radiation beam 352 may be directed along an axis transverse to the longitudinal axis R, towards the cargo conveyance 350. This may be advantageous where space limitations prevent such alignment. For example, a deflection of the central ray R15 of about 30 degrees may be useful in certain configurations.

An electromagnet with a permanent magnet core may be used to shift the average beam direction and provide improved uniformity of radiation beam intensity across the face of an object. The permanent magnetic field generated by the permanent magnet may cause the shift in the average direction of the magnetic field while the induced, time-varying magnetic field may shift the central ray of the radiation beam about the average direction of the radiation beam.

In the embodiments above, to cause a 20 degree deflection in the electron beam (or a portion thereof) with a path length of about 1 cm through a magnetic field, for example, a magnetic field strength of about 1800 Gauss would be required. If the path length is about 2 cm, the field strength could be about 900 Gauss. Standard permanent magnets could be used.

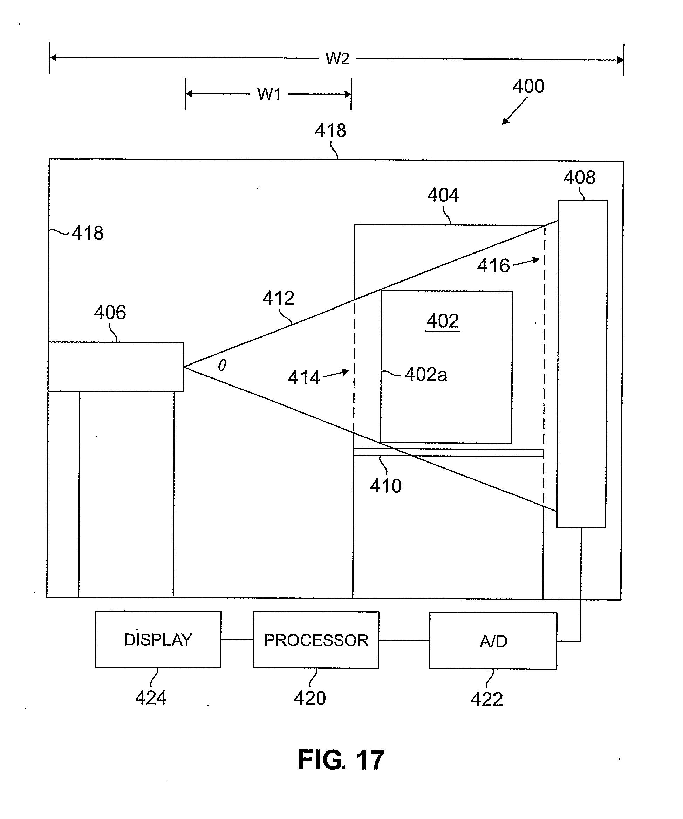

Fig. 17 is a front view of an example of an X-ray scanning system 400 in accordance with an embodiment of the invention. A cargo conveyance 402 or other such object to be inspected is conveyed through a shielded tunnel 404 between a radiation source 406, in accordance with an embodiment of the invention, and a stationary detector array 408 by a conveying system 410. The radiation source 406 may be any of the radiation sources discussed above. The radiation beam is collimated into a vertical fan beam 412. Windows 414, 416 are provided in the walls of the tunnel 404 to allow for the passage of radiation to the cargo conveyance 402 from the source 406 and from the cargo conveyance 402 to the detector array 408. The detector array 408 may also be provided within the shielded tunnel 404, in which case only one window 414a would be required. The conveyor system 410 may comprise a mechanically driven belt of material that causes low attenuation of the radiation. The conveyor system 410 can also comprise mechanically driven rollers, with gaps in the rollers to allow for the passage of the radiation. Shielding walls 418 surround the source 406, the detector 408 and a portion of the conveying system 410. Openings (not shown) are provided in the shielding walls 418 for the cargo conveyance 406 to be conveyed into and out of the scanning system 400 by the conveying system 410. A second stationary source in accordance with the invention (not shown) may be provided above the conveying system 410 and a second stationary detector (not shown) may be provided below the conveying system (or vice-a-versa), to examine the object 10 from another angle. Radiation source 406 may emit radiation at multiple energies, if desired. Detectors may be positioned in other locations with respect to the cargo conveyance 402 instead of or in addition to the detector array 408, to detect scattered radiation.

The detector 408 is electrically coupled to a processor 420, such as a computer, through an analog-to-digital converter 422. The processor 420 reconstructs the data output by the detector array 408 into images which may be displayed on a monitor 424 on site or at another location. The images may be analyzed to detect contraband, such as guns, knives, explosive material, nuclear material and drugs, for example. The images may also be used for manifest verification, for example. While one processor 420 and A/D converter 422 are shown, additional processors, A/D converters, and other signal processing circuits may be provided, as is known in the art.

To detect a fan beam, the detector 408 may be a one dimensional detector array comprising modules of detector elements, as is known in the art. Each one dimensional detector module may comprise a single row of a plurality of detector elements. The detector elements may comprise a radiation sensitive detector, such as a scintillator, and a photosensitive detector, such as a phototube or photodiode, as is known in the art. A high density scintillator, such as a cadmium tungstate scintillator, may be used. A cadmium tungstate scintillator is available from Saint Gobain Crystals, Solon, Ohio, U.S.A., or Spectra-Physics, Hilger Crystals, Kent, U.K., for example, with a density of 8 grams per cubic cm. Detector modules having detection efficiencies of from about 10% to about 80% or more are preferably used, depending on the radiation spectrum of the radiation beam 412. Multiple, closely spaced, parallel fan beams may also be defined by one or more collimators. In that case, a row of one dimensional detectors may be provided for each fan beam.

Instead of a fan beam, the radiation beam may be collimated into a cone beam, in which case the detector 408 may be a detector array comprising two dimensional detector modules.

In one example, the source 406 is separated from a face 402a of the cargo conveyance 402 by a distance W1 of about 2.5 feet (0.8 meters). The cargo conveyance 402 has a height of about 8 feet (2.4 meters). A vertical fan beam 412 of radiation may be emitted over an angle θ of about 120 degrees by the source 406 to irradiate the face 402a of the cargo conveyance 402 as the conveyance passes though the vertical fan beam. Intensity variation across the height of the cargo conveyance may be less than 50% and/or the intensity may be substantially uniform, depending on the configuration of the radiation source 406, as discussed above. The width W2 of the system 400 may be about 16.5 feet (about 5.03 meters), for example. The peak energy of the radiation source may be dependent on the size of the cargo conveyance. For example, if the cargo container has a thickness of about 8 feet (2.4 meters), the peak energy may be 6 MeV or greater. A comparable prior art system could have a comparable width of about 34 feet (10.4 meters) or more.

One of ordinary skill in the art will recognize that changes may be made to the embodiments described herein without departing from the scope of the invention, which is defined by the claims, below.

## Claims

1. A system for examining an object comprising:
a radiation source comprising:
a housing;
a source of a beam of charged particles;
a first, accelerating chamber within the housing, to accelerate a beam of charged particles emitted by the source of the beam into the first accelerating chamber, the first chamber having an output;
a second chamber within the housing, the second chamber having an input aligned with the output of the first chamber to receive the beam of accelerated charged particles;
target material supported within the second chamber, wherein impact of the target material by the accelerated charged particles causes generation of radiation; and
an electromagnet supported by the housing proximate the second chamber, to provide a magnetic field to selectively deflect the beam of accelerated charged particles along a central ray prior to impacting the target material such that it impacts the target material along that deflected central ray; and
a controller configured to cause generation of a first magnetic field in a first direction by the electromagnet to deflect the accelerated charged particle beam along a first axis so that the electron beam impacts the target at a first location to generate a first diverging radiation beam having a first central ray, to not generate a magnetic field so that the accelerated charged particle beam impacts the target at a second location different from the first location to generate a second diverging radiation beam having a second central ray different from the first central ray, and to cause generation of a second magnetic field by the electromagnet in a direction opposite the first direction to deflect the accelerated charged particle beam along a second axis so that the electron beam impacts the target at a third location different from the first and second locations to generate a third diverging radiation beam having a third central ray different from the first and second central rays, the system further comprising a conveyor system to move the object through the system and a detector array on a side of the conveying system opposite the radiation source to receive diverging radiation transmitted through the object; wherein the radiation source is positioned with respect to the conveying system such that the first radiation beam irradiates a first portion of the object, the second radiation beam irradiates a second portion of the object at least partially different than the first portion of the object, and the third radiation beam irradiates a third portion of the object at least partially different from the second portion, and wherein the first, second, and third radiation beams emit radiation having a maximum intensity in a direction along a central ray of the respective charged particle beam.

2. The system of claim 1, wherein the electromagnet provides a time-varying magnetic field during operation.

3. The system of claim 1, wherein the electromagnet comprises:
a core defining first and second opposing pole faces, wherein the core comprises material in which a magnetic field may be induced; a coil around at least a portion of the core; and a current source coupled to the coil; wherein the controller is coupled to the current source.

4. The system of claim 3, wherein the core comprises a magnetic material.

5. The system of claim 3, wherein the controller selectively causes current flow in a first direction to generate the first magnetic field to deflect the beam in the first direction along a first axis; the controller selectively causes current flow in a second direction opposite the first direction to generate the third magnetic field to deflect the beam in a second direction different from the first direction, along a second axis different from the first axis; and the controller selectively causes no current flow to allow the beam to travel undeflected along a third axis different from the first and second axes.

6. The system of claim 5, wherein the controller is programmed to repeatedly cycle among causing current flow in the first direction, causing current flow in the second direction and causing no current flow.

7. The system of claim 1, wherein:
the first chamber and the second chamber have coincident longitudinal axes along which the beam travels; and the target is aligned with the longitudinal axes.

8. The system of claim 1, wherein:
the source of charged particles is a source of a beam of electrons; and
impact of the target by the beam causes generation of X-ray radiation.

9. The system of claim 1, wherein the target is tungsten.

10. The system of claim 1, wherein the target is elongated along a direction of deflection of the beam.

11. The system of claim 1, wherein:
the housing has a longitudinal axis; and
the second radiation beam is emitted along a central ray coincident with the longitudinal axis.

12. The system of claim 1, wherein the target material comprises a refractory metal.

13. The system of claim 1, wherein the radiation variation across the object is less than 50%.

14. A method of examining an object, comprising:
directing an accelerated beam of charged particles from a first, accelerating chamber towards a target supported in a second chamber, wherein the impact of the target by the accelerated charged particles causes generation of radiation;
deflecting the charged particle beam at a first time by a first magnetic field;
impacting the target by the deflected beam at a first location to generate a first diverging radiation beam having a first central ray;
scanning a first portion of an object by the first radiation beam; impacting the target by an undeflected charged particle beam at a second time different than the first time, at a second location different from the first location to generate a second diverging radiation beam having a second central ray different from the first central ray;
scanning a second portion of the object by the second radiation beam, the second portion being at least partially different than the first portion; deflecting the charged particle beam at a third time by a second magnetic field; impacting the target by the charged particle beam deflected at the third time different from the first and second times at a third location different from the first and second locations to generate a third diverging radiation beam having a third central ray different from the first and second central rays, and detecting the first, second and third diverging radiation beams transmitted through the object by a detector array.

15. The method of claim 14, comprising:
deflecting the beam by providing a time-varying magnetic field.

16. The method of claim 14, wherein the beam is an electron beam, the method comprising:
providing the first, second and third radiation beams by impacting the target by the electron beam to generate X-ray radiation.

17. The system of claim 1, wherein the target is elliptical, and the first and second locations are along a long axis of the elliptical target.

18. The system of claim 1, wherein the first, accelerating chamber, is part of a microwave linear accelerator.

19. The system of claim 1, wherein the target material has a width from about 2mm to about 5mm.

20. The system of claim 10, wherein the target is elongated in a first direction and has a length along the elongated direction of from about 5mm to about 6mm.

21. The system of claim 1, wherein the first and second radiation beams overlap partially on a face of the object.

22. The system of claim 8, wherein the accelerated electron beam has a width of from about 1mm to about 3mm.

## Patentansprüche

1. System zum Untersuchen eines Objekts, umfassend:
eine Strahlungsquelle, umfassend:
ein Gehäuse;
eine Quelle eines Strahls geladener Teilchen;
eine erste Beschleunigungskammer in dem Gehäuse zum Beschleunigen eines Strahls geladener Teilchen, der von der Quelle des Strahls in die erste Beschleunigungskammer abgestrahlt wird, wobei die erste Kammer einen Ausgang aufweist;
eine zweite Kammer in dem Gehäuse, wobei die zweite Kammer einen Eingang aufweist, der mit dem Ausgang der ersten Kammer ausgerichtet ist, um den Strahl beschleunigter geladener Teilchen zu empfangen;
Zielmaterial, das in der zweiten Kammer getragen wird, wobei das Auftreffen der beschleunigten geladenen Teilchen auf das Zielmaterial die Erzeugung von Strahlung bewirkt; und
einen Elektromagneten, der von dem Gehäuse benachbart zur zweiten Kammer getragen wird, um ein Magnetfeld zum selektiven Ablenken des Strahls beschleunigter geladener Teilchen entlang eines Zentralstrahls vor dem Auftreffen auf das Zielmaterial bereitzustellen, derart, dass er entlang des abgelenkten Zentralstrahls auf das Zielmaterial trifft; und
eine Steuereinrichtung, die dazu konfiguriert ist, die Erzeugung eines ersten Magnetfelds in einer ersten Richtung durch den Elektromagneten zu bewirken, um den beschleunigten geladenen Teilchenstrahl entlang einer ersten Achse abzulenken, derart, dass der Elektronenstrahl zum Erzeugen eines ersten divergierenden Strahlungsstrahls mit einem ersten Zentralstrahl an einer ersten Stelle auf das Ziel trifft, um kein Magnetfeld zu erzeugen, derart, dass der beschleunigte geladene Teilchenstrahl zum Erzeugen eines zweiten divergierenden Strahlungsstrahls mit einem zweiten Zentralstrahl, der verschieden vom ersten Zentralstrahl ist, an einer zweiten Stelle, die verschieden von der ersten Stelle ist, auf das Ziel trifft, und die Erzeugung eines zweiten Magnetfelds durch den Elektromagneten in einer Richtung entgegengesetzt zur ersten Richtung zu bewirken, um den beschleunigten geladenen Teilchenstrahl entlang einer zweiten Achse abzulenken, derart, dass der Elektronenstrahl zum Erzeugen eines dritten divergierenden Strahlungsstrahls mit einem dritten Zentralstrahl, der vom ersten und zweiten Zentralstrahl verschieden ist, an einer dritten Stelle auf das Ziel trifft, die verschieden von der ersten und zweiten Stelle ist, wobei das System ferner ein Fördersystem umfasst, um das Objekt durch das System zu bewegen, und eine Detektoranordnung an einer Seite des Fördersystems gegenüber der Strahlungsquelle, um divergierende Strahlung zu empfangen, die durch das Objekt durchgelassen wird; wobei die Strahlungsquelle in Bezug auf das Fördersystem derart angeordnet ist, dass der erste Strahlungsstrahl einen ersten Abschnitt des Objekts bestrahlt, der zweite Strahlungsstrahl einen zweiten Abschnitt des Objekts bestrahlt, der wenigstens teilweise vom ersten Abschnitt des Objekts verschieden ist, und der dritte Strahlungsstrahl einen dritten Abschnitt des Objekts bestrahlt, der wenigstens teilweise vom zweiten Abschnitt des Objekts verschieden ist, und wobei der erste, zweite und dritte Strahlungsstrahl Strahlung mit einer maximalen Stärke in einer Richtung entlang eines Zentralstrahls des jeweiligen geladenen Teilchenstrahls abstrahlen.

2. System nach Anspruch 1, wobei der Elektromagnet während des Betriebs ein zeitlich variierendes Magnetfeld bereitstellt.

3. System nach Anspruch 1, wobei der Elektromagnet Folgendes umfasst:
einen Kern, der eine erste und eine zweite gegenüberliegende Polfläche definiert, wobei der Kern Material umfasst, in dem ein Magnetfeld induziert werden kann; eine Spule um wenigstens einen Abschnitt des Kerns; und eine Stromquelle, die an die Spule gekoppelt ist; wobei die Steuereinrichtung an die Stromquelle gekoppelt ist.

4. System nach Anspruch 3, wobei der Kern ein magnetisches Material umfasst.

5. System nach Anspruch 3, wobei die Steuereinrichtung selektiv bewirkt, dass der Strom in einer ersten Richtung fließt, um das erste Magnetfeld zu erzeugen, um den Strahl in der ersten Richtung entlang einer ersten Achse abzulenken; wobei die Steuereinrichtung selektiv bewirkt, dass der Strom in einer zweiten Richtung entgegengesetzt zur ersten Richtung fließt, um das dritte Magnetfeld zu erzeugen, um den Strahl in einer zweiten Richtung, die verschieden von der ersten Richtung ist, entlang einer zweiten Achse abzulenken, die verschieden von der ersten Achse ist; und die Steuereinrichtung selektiv bewirkt, dass kein Strom fließt, so dass sich der Strahl ohne Ablenkung entlang einer dritten Achse fortpflanzen kann, die verschieden von der ersten und zweiten Achse ist.

6. System nach Anspruch 5, wobei die Steuereinrichtung dazu programmiert ist, wiederholt zwischen dem Bewirken des Stromflusses in der ersten Richtung, dem Bewirken des Stromflusses in der zweiten Richtung und dem Nichtbewirken eines Stromflusses umzuschalten.

7. System nach Anspruch 1, wobei
die erste Kammer und die zweite Kammer übereinstimmende Längsachsen aufweisen, entlang denen sich der Strahl fortpflanzt; und das Ziel an den Längsachsen ausgerichtet ist.

8. System nach Anspruch 1, wobei:
die Quelle geladener Teilchen eine Quelle eines Elektronenstrahls ist; und
das Auftreffen des Strahls auf das Ziel die Erzeugung von Röntgenstrahlung bewirkt.

9. System nach Anspruch 1, wobei das Ziel Wolfram ist.

10. System nach Anspruch 1, wobei das Ziel in einer Richtung der Ablenkung des Strahls gestreckt ist.

11. System nach Anspruch 1, wobei:
das Gehäuse eine Längsachse aufweist; und
der zweite Strahlungsstrahl entlang eines Zentralstrahls abgestrahlt wird, der mit der Längsachse übereinstimmt.

12. System nach Anspruch 1, wobei das Zielmaterial ein feuerfestes Material umfasst.

13. System nach Anspruch 1, wobei die Strahlungsvariation am Objekt weniger als 50 % beträgt.

14. Verfahren zum Untersuchen eines Objekts, umfassend:
Lenken eines beschleunigten Strahls geladener Teilchen von einer ersten Beschleunigungskammer zu einem Ziel, das in einer zweiten Kammer getragen wird, wobei das Auftreffen der beschleunigten geladenen Teilchen auf das Ziel die Erzeugung von Strahlung bewirkt;
Ablenken des geladenen Teilchenstrahls zu einem ersten Zeitpunkt durch ein erstes Magnetfeld;
Auftreffenlassen des abgelenkten Strahls auf das Ziel an einer ersten Stelle, um einen ersten divergierenden Strahlungsstrahl mit einem ersten Zentralstrahl zu erzeugen;
Abtasten eines ersten Abschnitts eines Objekts durch den ersten Strahlungsstrahl;
Auftreffenlassen eines nicht abgelenkten geladenen Teilchenstrahls auf das Ziel zu einem zweiten Zeitpunkt, der vom ersten Zeitpunkt verschieden ist, an einer zweiten Stelle, die von der ersten Stelle verschieden ist, um einen zweiten divergierenden Strahlungsstrahl mit einem zweiten Zentralstrahl zu erzeugen, der vom ersten Zentralstrahl verschieden ist;
Abtasten eines zweiten Abschnitts des Objekts durch den zweiten Strahlungsstrahl, wobei der zweite Abschnitt wenigstens teilweise von dem ersten Abschnitt verschieden ist; Ablenken des geladenen Teilchenstrahls zu einem dritten Zeitpunkt durch ein zweites Magnetfeld; Auftreffenlassen des geladenen Teilchenstrahls, der zum dritten Zeitpunkt abgelenkt wird, der vom ersten und zweiten Zeitpunkt abweicht, an einer dritten Stelle, die verschieden von der ersten und zweiten Stelle ist, auf das Ziel, um einen dritten divergierenden Strahlungsstrahl zu erzeugen, der einen dritten Zentralstrahl aufweist, der vom ersten und zweiten Zentralstrahl verschieden ist, und Detektieren des ersten, zweiten und dritten divergierenden Strahlungsstrahls, die durch das Objekt durchgelassen werden, mittels einer Detektoranordnung.

15. Verfahren nach Anspruch 14, umfassend:
Ablenken des Strahls durch Bereitstellen eines zeitlich variierenden Magnetfelds.

16. Verfahren nach Anspruch 14, wobei der Strahl ein Elektronenstrahl ist, wobei das Verfahren Folgendes umfasst:
Bereitstellen des ersten, zweiten und dritten Strahlungsstrahls, indem der Elektronenstrahl auf das Ziel trifft, um Röntgenstrahlung zu erzeugen.

17. System nach Anspruch 1, wobei das Ziel elliptisch ist und die erste und zweite Stelle entlang einer langen Achse des elliptischen Ziels liegen.

18. System nach Anspruch 1, wobei die erste Beschleunigungskammer Teil eines linearen Mikrowellenbeschleunigers ist.

19. System nach Anspruch 1, wobei das Zielmaterial eine Breite von etwa 2 mm bis etwa 5 mm aufweist.

20. System nach Anspruch 10, wobei das Ziel in einer ersten Richtung gestreckt ist und eine Länge in der gestreckten Richtung von etwa 5 mm bis etwa 6 mm aufweist.

21. System nach Anspruch 1, wobei der erste und zweite Strahlungsstrahl sich an einer Fläche des Objekts teilweise überlagern.

22. System nach Anspruch 8, wobei der beschleunigte Elektronenstrahl eine Breite von etwa 1 mm bis etwa 3 mm aufweist.

## Revendications

1. Système permettant d'examiner un objet comprenant :
une source de rayonnement comprenant :
une enceinte ;
une source d'un faisceau de particules chargées ;
une première chambre d'accélération à l'intérieur de l'enceinte, pour accélérer un faisceau de particules chargées émises par la source du faisceau dans la première chambre d'accélération, la première chambre ayant une sortie ;
une deuxième chambre à l'intérieur de l'enceinte, la deuxième chambre ayant une entrée alignée sur la sortie de la première chambre pour recevoir le faisceau de particules chargées accélérées ;
un matériau cible supporté à l'intérieur de la deuxième chambre, dans laquelle l'impact des particules chargées accélérées sur le matériau cible entraîne la formation d'un rayonnement ; et
un électroaimant supporté par l'enceinte à proximité de la deuxième chambre, pour créer un champ magnétique afin de dévier de façon sélective le faisceau de particules chargées accéléré le long d'un rayon central avant de percuter le matériau cible de sorte qu'il percute le matériau cible le long de ce rayon central dévié ; et
un contrôleur conçu pour créer un premier champ magnétique dans une première direction par l'électroaimant pour dévier le faisceau de particules chargées accélérées le long d'un premier axe de sorte que le faisceau d'électrons percute la cible à un premier emplacement pour produire un premier faisceau de rayonnement divergent ayant un premier rayon central, pour ne pas produire de champ magnétique de sorte que le faisceau de particules chargées accéléré percute la cible à un deuxième emplacement différent du premier emplacement pour produire un deuxième faisceau de rayonnement divergent ayant un deuxième rayon central différent du premier rayon central, et pour créer un deuxième champ magnétique par l'électroaimant dans une direction opposée à la première direction pour dévier le faisceau de particules chargées accéléré le long d'un deuxième axe de sorte que le faisceau d'électrons percute la cible à un troisième emplacement différent des premier et deuxième emplacements pour produire une troisième faisceau de rayonnement divergent ayant un troisième rayon central différent des premier et deuxième rayons centraux, le système comprenant en outre un système de transport pour déplacer l'objet à travers le système et un réseau de détecteurs sur un côté du système de transport 30 à l'opposé de la source de rayonnement pour recevoir un rayonnement divergent émis à travers l'objet ; dans lequel la source de rayonnement est positionnée par rapport au système de transport de sorte que le premier faisceau de rayonnement irradie une première partie de l'objet, le deuxième faisceau de rayonnement irradie une deuxième partie de l'objet au moins partiellement différente de la première partie de l'objet, et le troisième faisceau de rayonnement irradie une troisième partie de l'objet au moins partiellement différente de la deuxième partie, et dans lequel le premier, deuxième et troisième faisceaux de rayonnement émettent un rayonnement ayant une intensité maximale dans une direction le long d'un rayon central du faisceau de particules chargées respectif.

2. Système selon la revendication 1, dans lequel l'électroaimant fournit un champ magnétique variant dans le temps pendant le fonctionnement.

3. Système selon la revendication 1, dans lequel l'électroaimant comprend :
un noyau définissant des première et deuxième faces polaires opposées, le noyau comprenant un matériau dans lequel un champ magnétique peut être induit ; une bobine autour d'au moins une partie du noyau ; et une source de courant couplée à la bobine ; dans lequel le contrôleur est couplé à la source de courant.

4. Système selon la revendication 3, dans lequel le noyau comprend un matériau magnétique.

5. Système selon la revendication 3, dans lequel le contrôleur entraîne de façon sélective la création du premier champ magnétique par une circulation de courant dans une première direction pour défléchir le faisceau dans la première direction le long d'un premier axe ; le contrôleur entraîne de façon sélective la création du troisième champ magnétique par une circulation de courant dans une deuxième direction opposée à la première direction pour défléchir le faisceau dans une deuxième direction différente de la première direction, le long d'un deuxième axe différent du premier axe ; et le contrôleur n'entraîne de façon sélective aucune circulation de courant pour autoriser le faisceau à se déplacer sans être dévié le long d'un troisième axe différente des premier et deuxième axes.

6. Système selon la revendication 5, dans lequel le contrôleur est programmé pour effectuer des cycles répétés entre une circulation de courant provoquée dans la première direction, une circulation de courant provoquée dans la deuxième direction et l'absence circulation de courant.

7. Système selon la revendication 1, dans lequel :
la première chambre et la deuxième chambre ont des axes longitudinaux coïncidents le long desquels le faisceau se déplace ; et dans lequel la cible est alignée sur l'axe longitudinal.

8. Système selon la revendication 1, dans lequel :
la source de particules chargées est une source d'un faisceau d'électrons ; et dans lequel un impact de la cible par le faisceau crée un rayonnement par rayons X.

9. Système selon la revendication 1, dans lequel la cible est du tungstène.

10. Système selon la revendication 1, dans lequel la cible est allongée le long d'une direction de déflexion du faisceau.

11. Système selon la revendication 1, dans lequel :
l'enceinte a un axe longitudinal ; et
le deuxième faisceau de rayonnement est émis le long d'un rayon central qui coïncide avec l'axe longitudinal.

12. Système selon la revendication 1, dans lequel le matériau cible comprend un métal réfractaire.

13. Système selon la revendication 1, dans lequel la variation de rayonnement à travers l'objet est inférieure à 50 %.

14. Procédé d'examen d'un objet, comprenant :
l'orientation d'un faisceau accéléré de particules chargées d'une première chambre d'accélération vers une cible supportée dans une seconde chambre, dans lequel l'impact de la cible par les particules chargées accélérées crée un rayonnement ;
la déflexion du faisceau de particules chargées une première fois par un premier champ magnétique ;
l'impact sur la cible par le faisceau dévié à un premier emplacement pour créer un premier faisceau divergent ayant un premier rayon central ;
le balayage d'une première partie d'un objet par le premier faisceau de rayonnement ; l'impact sur la cible par un faisceau de particules chargées non dévié à un deuxième moment différent de la première fois, à un deuxième emplacement différent du premier emplacement pour créer un deuxième faisceau de rayonnement divergent ayant un deuxième rayon central différent du premier rayon central ;
le balayage d'une deuxième partie de l'objet par le deuxième faisceau de rayonnement, la deuxième partie étant au moins partiellement différente de la première partie ; la déflexion du faisceau de particules chargées une troisième fois par un deuxième champ magnétique ; l'impact sur la cible par le faisceau de particules chargées dévié à un troisième moment différent des première et deuxième fois à un troisième emplacement différent des premier et deuxième emplacements pour produire un troisième faisceau de rayonnement divergent ayant un troisième rayon central différent des premier et deuxième rayons centraux, et la détection des premier, deuxième et troisième faisceaux de rayonnement divergents émis à travers l'objet par un réseau de détecteurs.

15. Procédé selon la revendication 14, comprenant :
la déflexion du faisceau en fournissant un champ magnétique variant dans le temps.

16. Procédé selon la revendication 14, dans lequel le faisceau est un faisceau d'électrons, le procédé comprenant :
la fourniture des premier, deuxième et troisième faisceaux de rayonnement en percutant la cible par le faisceau d'électrons pour créer un rayonnement par rayons X.

17. Système selon la revendication 1, dans lequel la cible est elliptique, et les premier et deuxième emplacements sont le long d'un axe long de la cible elliptique.

18. Système selon la revendication 1, dans lequel la première chambre d'accélération, fait partie d'un accélérateur linéaire qui utilise les micro-ondes.

19. Système selon la revendication 1, dans lequel le matériau cible a une largeur d'environ 2 à environ 5 mm.

20. Système selon la revendication 10, dans lequel la cible est allongée dans une première direction et a une longueur le long de la direction allongée d'environ 5 à environ 6 mm.

21. Système selon la revendication 1, dans lequel les premier et deuxième faisceaux de rayonnement chevauchent partiellement une face de l'objet.

22. Système selon la revendication 8, dans lequel le faisceau d'électrons accéléré a une largeur d'environ 1 à environ 3 mm.
